# EUROPÄISCHE PATENTSCHRIFT

(11) **EP 1 434 707 B1**
(45) Veröffentlichungstag und Bekanntmachung des Hinweises auf die Patenterteilung: **20.02.2008**
(21) Anmeldenummer: 02779429.6
(22) Anmeldetag: 27.09.2002
(51) Int. Cl.: B60T 17/08

(54) **FEDERSPEICHERZYLINDER**
SPRING STORAGE CYLINDER
CYLINDRE A RESSORT

(30) Priorität: 01.10.2001 DE 10148479; 12.08.2002 DE 10236923
(43) Veröffentlichungstag der Anmeldung: 07.07.2004
(73) Patentinhaber: KNORR-BREMSE SYSTEME FÜR NUTZFAHRZEUGE GMBH, 80809 München (DE)
(72) Erfinder: SIEBKE, Alf, 80333 München (DE)
(86) Internationale Anmeldenummer: PCT/EP2002/010854
(87) Internationale Veröffentlichungsnummer: WO 2003/029064

(56) Entgegenhaltungen:
- US-A- 4 796 513
- US-A- 5 572 187
- US-A- 5 753 807
- US-A- 5 816 371
- US-A- 5 825 287

## Beschreibung

Die vorliegende Erfindung betrifft einen Federspeicherzylinder zur Erfassung der Hilfs- und Feststellbremsfunktion nach dem Oberbegriff des Anspruches 1.

Es gibt bereits Federspeicherzylinder zum Erzeugen einer Hilfs- oder Feststellbremsfunktion, die im Fahrbetrieb gelöst sind und im Stand mittels einer Feder auf einen Bremshebel zum Festlegen des Fahrzeuges wirken. Die gelöste Position wird dabei erreicht, sobald der pneumatische Druck in einem Primärraum des Federspeichers den Federspeicherkolben gegen die Kraft der Speicherfeder in die zurückgezogene Position verschoben hat. Der zum Festlegen des Fahrzeuges erforderliche Arbeitshub wird ausgelöst durch Druckabfall im Primärraum des Federspeichers, bis sich durch den Kraftüberschuss der Speicherfeder der Federspeicherkolben in Bewegung setzt und seinen Arbeitshub ausführt. Entgegen dem Arbeitshub wirken ein gegebenenfalls verbleibender Druck im Primärraum und die Reaktionskraft der Bremse selbst.

Dokument FR2766534 zeigt ein Federspeicherzylinder, der als nachsliegender Stand der Technik angesehen wird.

Ein solcher Federspeicherzylinder umfasst ferner eine Lösespindel, damit im Fall von Energieverlust der Druckluftbremsanlage ein Lösen des Federspeichers möglich ist. Die Lösespindel kann dabei betätigt werden, um den Kolben zum Lösen des Bremshebels in eine zurückgezogene Position zu bewegen. Wenn die Lösespindel als Notlösevorrichtung die Feststell- oder Hilfsbremsanlage unwirksam macht, muss dies visuell erkennbar sein, damit der Fahrer oder das Werkstattpersonal den jeweiligen Betriebszustand erkennen kann. Bei den bekannten Federspeicherzylindern ragt die Lösespindel im Notlösezustand aus dem Federspeichergehäuse heraus oder ein mit der Lösespindel verbundener Stift tritt aus dem Gehäuse heraus. Dadurch kann der Betriebszustand der Notlösevorrichtung von außen erkannt werden. Die visuelle Überprüfung des Betriebszustandes ist jedoch nachteilig, da bei den geringen Einbauräumen die Überprüfung relativ schwierig ist und der Betriebszustand vom Betrachter auch falsch beurteilt werden kann. Ferner befinden sich am Fahrzeug bis zu sechs Federspeicher, so dass die visuelle Prüfung zeitaufwendig ist. Zusätzlich kann die Lösespindel nur teilweise aus dem Federspeichergehäuse herausgeschraubt werden. Die dann entstehende Zwischenstellung ist undefiniert und könnte übersehen bzw. falsch interpretiert werden. Eine in dieser Art betätigte Notlösevorrichtung kann die Feststell- und Hilfsbremsfunktion reduzieren, da der Arbeitshub des Kolbens eingeschränkt ist.

Zum sicheren und wirtschaftlichen Betrieb des Fahrzeugs benötigt der Fahrer zu jedem Zeitpunkt eine Information über den aktuellen Betriebszustand der Feststellbremse. Dies ist bei der Inbetriebnahme des Fahrzeugs mit leeren Luftbehältern von Bedeutung da ein Anfahren erst bei Lösen der Feststellbremse erfolgen soll. Auch muss ein eventueller Defekt der Feststellbremsanlage beispielsweise durch Druckverlust sofort erkennbar sein, damit es nicht während der Fahrt zu einem unkontrollierten Bremsvorgang durch die Feststellbremse kommen kann.

Das Erreichen der Lösestellung des Federspeicherzylinders wird meist indirekt durch Kontrolle des Drucks in dem Primärraum abgesichert, indem ein Druckschalter bei einem definierten Lösedruck anspricht und eine Warnlampe in der Armaturentafel löscht. Bei vollem Betriebsdruck wird der Federspeicherkolben gegen die Wirkung der Feder in die zurückgezogene Position in Hubstellung 0 gedrückt. Das Löschen der Warnlampe in der Armaturentafel erfolgt durch den Druckschalter, dessen Schaltdruck auf einen bestimmten Wert festgelegt ist, der über dem eigentlichen Lösedruck des Federspeicherzylinders liegt. Das ergibt sich aus der Tatsache, dass der Lösedruck stark toleranzbehaftet ist, aufgrund der fertigungsbedingt relativ großen Kraftabgabetoleranzen der Speicherfeder und Faktoren wie veränderte Reibkräfte an den dynamischen Dichtungen des Federspeicherkolbens sowie ein Kraftabfall aufgrund von Relaxation. Diese Einflüsse bewirken, dass sich der Hub des Kolbens bei gleichem pneumatischem Druck unterschiedlich verhält. Die Löseposition kann somit nicht eindeutig einem genauen Betriebsdruck zugeordnet werden. Vielmehr sind bei der Festlegung des Schaltdruckes des Druckschalters diese Einflüsse zu berücksichtigen, so dass auch bei ungünstiger Toleranzsituation das Schaltsignal nicht zu früh ausgelöst wird.

Damit löst der Schalter das Signal aber im Regelfall zu spät aus, d. h. nach dem Erreichen der Lösestellung des Federspeicherkolbens, womit ein Zeitverlust entsteht, der die Anzeige der Fahrbereitschaft des Fahrzeuges für den Fahrer ohne Notwendigkeit verzögert. Umgekehrt kommt bei Aktivierung der Feststellbremse die Warnlampenfunktion unnötig früh, da beim Auslösen des druckgesteuerten Signals der Federspeicherkolben noch gar nicht bewegt wurde. Der Einsatz eines Druckschalters bei einem Federspeicherzylinder besitzt ferner den Nachteil, dass der Federspeicherzylinder immer mit dem vollen Betriebsdruck, beispielsweise 8 bar belüftet wird, während zum Lösen bereits der Lösedruck von beispielsweise 5,1 bar ausreicht. Die Energie, die zur Erzeugung der Druckdifferenz benötigt wird, bleibt vollständig ungenutzt und erhöht den Energieverbrauch des Fahrzeuges. Dies ist insbesondere dann von Bedeutung, wenn die Feststellbremsanlage häufig benutzt wird, wie dies bei Fahrzeugen im Verteilerverkehr der Fall ist. Zudem entsteht ein Zeitverlust, bis die Hilfs- oder Feststellbremsung wirksam wird, da zunächst der Differenzdruck zwischen Betriebsdruck und Lösedruck vor dem Beginn einer Arbeitsbewegung des Federspeicherkolbens abgebaut werden muss.

Es ist daher Aufgabe der vorliegenden Erfindung, einen Federspeicherzylinder der eingangs genannten Art zu schaffen, der die oben genannten Nachteile vermeidet und mit dem eine einfache und schnelle Erfassung des Betriebszustandes der Hilfs-oder Feststellbremse möglich ist.

Diese Aufgabe wird mit einem Federspeicherzylinder mit den Merkmalen des Anspruches 1 gelöst.

Erfindungsgemäß ist zur Erfassung der Position des Kolbens in dem Gehäuse mindestens ein Kontaktschalter vorgesehen, so dass der Betriebszustand des Federspeicherzylinders überwacht werden kann. Dadurch entfällt die beim Stand der Technik übliche toleranzbehaftete Kontrolle des Federspeicherzylinders mittels pneumatischen Drucks, da die zu sensierende Position des Federspeicherkolbens nicht indirekt sondern direkt erfasst wird. Dies führt zu einer deutlich früheren Signalauslösung, was dem Fahrer die Fahrbereitschaft des Fahrzeugs zum frühest möglichen Zeitpunkt anzeigen kann. Wenn die Feststellbremse aktiviert wird und damit der Druck im Federspeicherzylinder abfällt, wird ein Signal erzeugt, das die Warnlampe wiederum einschaltet und so den Fahrer auf die eingelegte Feststellbremse hinweist. Wenn ein Defekt in dem System vorhanden ist, beispielsweise aufgrund einer Undichte im Druckluftsystem, einer gebrochenen Speicherfeder oder aufgrund eines anderen Umstandes, kann mittels des Kontaktschalters direkt der fehlerhafte Zustand erfasst werden und eine entsprechende Warnlampe in der Armaturentafel eingeschaltet werden.

Es ist auch möglich, einen Abgleich der Signale der einzelnen Federspeicherzylinder durchzuführen, um eine indirekte Erfassung von Fehlern zu ermöglichen. An einem Fahrzeug werden meist mehrere Federspeicherzylinder eingesetzt, die annähernd gleiche Schaltzeiten haben. Falls hier erhebliche Differenzen bei der Schaltzeit bestehen, die nicht mehr durch normale, durch Toleranzen bedingte Abweichungen in der Lösezeit begründbar sind, kann ein Warnsignal ausgegeben werden. Diese Möglichkeit der gegenseitigen Kontrolle der einzelnen Federspeicherzylinder ist auch von großer Bedeutung für die Verkehrssicherheit. Eine in ihrer Wirkung reduzierte Speicherfeder bzw. eine verminderte Bremswirkung kann beim Einsatz der Hilfsbremse zu einem kritischen Schiefziehen des Fahrzeuges führen bzw. die Feststellbremsfunktion kann unzulässig gemindert sein. Diese Probleme müssen sofort durch das Steuerungssystem eines Fahrzeuges erkannt und angezeigt werden, was mit den bisherigen manuellen Prüfungsmethoden nicht möglich war.

Gemäß einer bevorzugten Ausführungsform der Erfindung ist zwischen der Lösespindel und dem Kolben ein Kontaktschalter vorgesehen. Sobald der Kolben in die Anschlagstellung gebracht wird, und mechanisch an dem Zylinderboden anliegt, wird im Kontaktschalter ein Stromkreis geschaltet. Dadurch kann mit dem Kontaktschalter der Betriebszustand des Federspeicherzylinders erfasst werden, wenn der Kolben in der vollständig zurückgezogenen Position ist und die Bremse im ungebremsten Zustand ist. Mit dem Kontaktschalter kann damit die vorher beschriebene Warnlampe in der Armaturentafel gelöscht werden. Im Vergleich zu der Kontrolle mittels eines Druckschalters wird eine deutlich frühere Signalauslösung erreicht, weil die zu sensierende Endstellung des Federspeicherkolbens direkt erfasst wird.

Wenn der Kontaktschalter zwischen Lösespindel oder einem Lösespindelkopf und dem Kolben zur Erfassung der zurückgezogenen Position vorgesehen ist, kann ferner ein sich bewegender Kolben, beispielsweise aufgrund einer Undichte im Druckluftsystem erfasst werden. Eine derartige Fehlfunktion konnte bisher nur dann über die Warnlampe angezeigt werden, wenn in der Feststellbremsanlage der Betriebsdruck unter den Lösedruck abgesunken war und dementsprechend der Druckschalter ansprechen konnte. Bei einem andersartigen, typischen Fall von Undichte an der Dichtung des Federspeicherkolbens kann Druckluft in den Federraum des Federspeicherzylinders eintreten und dort einen Druckaufbau verursachen, der die Federkraft unterstützt und ab einer bestimmten Druckhöhe den Federspeicherkolben in Bewegung setzt. Solange der Betriebsdruck in der Feststellbremsanlage durch diese Leckage nicht unter den Lösedruck fällt, löst aber der Druckschalter kein Signal aus. Der ganze Vorgang kann unter entsprechenden Bedingungen schleichend eintreten, so dass für den Fahrer unmerklich das Lüftspiel der Bremse aufgebraucht wird und diese heiß laufen kann. Solche Defekte können bis zu einem Fahrzeugbrand führen und stellen eine große Gefährdung für den Fahrer und andere Verkehrsteilnehmer dar.

Ferner gibt es Situationen, bei denen die Lösespindel betätigt wird, um den Kolben in die zurückgezogene Position zu bewegen und somit die Notlösefunktion zu aktivieren. Dadurch wird der Kontaktschalter nicht mehr aktiviert, selbst wenn der Kolben in der zurückgezogenen Position angeordnet ist. Dadurch kann eine Warnlampe eingeschaltet werden oder eingeschaltet bleiben, die eine voll- oder teilbetätigte Notlösevorrichtung anzeigt. Dies ist für den Fahrer wichtig, weil eine verstellte Lösespindel ihrer Funktion entsprechend den Hub des Federspeicherkolbens ganz oder teilweise einschränkt, wodurch die Feststellbremse ganz oder teilweise außer Funktion gebracht wird. Auf ähnliche Weise ist es möglich, eine Lösespindel, die sich im Fahrbetrieb lockert und ungewollt aus dem Zylinderkörper herausgeschraubt wird, zu erkennen. Auch eine beispielsweise nach einer Fahrzeugreparatur nicht wieder vollständig eingeschraubte Lösespindel wird so erfasst, denn beim pneumatischen Lösen der Feststellbremsanlage erlischt dann die Warnlampe nicht. Dies ist auch deshalb von besonderer Bedeutung, da die Gewindeverbindung der Lösespindel im Zylinderkörper nur im vollständig eingeschraubten Zustand abdichtet. Ohne Dichtheit an dieser Stelle würde über das Gewindespiel Feuchtigkeit und Schmutz in den Federraum eindringen und Korrosion oder Undichte bis hin zum Ausfall der Hilfs-und Feststellbremsfunktion verursachen.

Der Kontaktschalter leistet somit einen Beitrag zur Erhöhung der Betriebssicherheit der Bremsanlage und damit zur Verbesserung der Verkehrssicherheit im allgemeinen.

Ferner kann das Signal des Kontaktschalters über die Betätigung der Warnlampe hinaus zu Steuerungszwecken im Bremssystem benutzt werden. Beispielsweise kann das mit Erreichen der Löseposition des Federspeicherkolbens ausgelöste elektrische Signal zur Ansteuerung des in der Feststellbremsanlage dem Federspeicherzylinder vorgeschaltete Relaisventil verwendet werden. In gebräuchlichen Systemen werden die Federspeicherzylinder zum Lösen der Feststellbremse mit dem vollen zur Verfügung stehenden Betriebsdruck belüftet, der üblicherweise um 35 bis 50 % über dem Lösedruck liegt. Die vorgeschlagene Abschaltung des Relaisventils soll bei Erreichen der Lösestellung des Federspeicherkolbens erfolgen. Dazu muss ein entweder direkt elektrisch angesteuertes oder ein pneumatisch über elektrisch geschaltete Magnetventile angesteuertes Relaisventil vorhanden sein. Mit dem Signal des Schalters wird das Relaisventil so gesteuert, dass ein weiterer Druckaufbau im Federspeicherzylinder unterbleibt. Dadurch wird zum einen die Energie zur Erzeugung des zusätzlich mit vollem Betriebsdruck vorgespannten Luftvolumens eingespart, das erforderlich ist, um den Druck im Federspeicherzylinder vom Lösedruck auf den vollen Betriebsdruck anzuheben. Zum anderen wird allgemein der Luftverbrauch des Federspeicherzylinders bei jeder Betätigung um das beschriebene Volumen reduziert. Da der Luftbehälter der Federspeicherbremsanlage nach gesetzlicher Vorschrift in bestimmter Abhängigkeit vom benötigten Druckluftvolumen der Feststellbremsanlage dimensioniert sein muss, ermöglicht dieser Vorteil der vorgeschlagenen Einrichtung eine Reduzierung der Luftbehältergröße mit dem damit einhergehenden Gewinn von Bauraum, Kosten und Gewicht.

Ein weiterer Vorzug der Steuerfunktion des elektrischen Kontaktschalters ist die verkürzte Ansprechzeit der Feststellbremse, da nur noch eine Entlüftung ab Lösedruck und nicht mehr ab dem vollen Betriebsdrucksniveau erfolgen muss. Das eliminiert die Zeit zum Abbau der Druckdifferenz, was insbesondere in Fahrsituationen von Vorteil ist, die ein schnelles Ansprechen der Feststellbremse fordern, wie dies z. B. beim Anhalten am Berg im Stop und Go Fahren zutrifft oder bei einer Notbremsung mit der Hilfsbremse. Der Effekt ist eine Erhöhung von Fahrkomfort und Verkehrssicherheit.

Schließlich ist ein weiterer Vorteil der Erfindung auch eine Kosteneinsparung für das Bremssystem, da dem geringen Mehraufwand für den Einsatz des elektrischen Schalters eine deutliche Kostenreduzierung durch das Entfallen des Druckschalters gegenübersteht. Ferner kann aufgrund des reduzierten Druckniveaus im Federspeicherzylinder eine daran angepasste geringere Dimensionierung verschiedener Bauteile des Federspeicherzylinders erfolgen, was zusätzliche Kosten- und Gewichtseinsparungen mit sich bringt.

Gemäß einer bevorzugten Ausführungsform der Erfindung ist in der Lösespindel mindestens ein Kanal zur Aufnahme von Leitungen zu dem Kontaktschalter vorgesehen. Dadurch können die Leitungen von dem Kontaktschalter geschützt verlaufen und nehmen keinen gesonderten Bauraum in Anspruch.

Vorzugsweise sind an einem aus dem Gehäuse ragenden Abschnitt der Lösespindel mit dem Kontaktschalter verbundene Kontaktelemente vorgesehen, die mit einem Stecker kontaktierbar sind. Damit wird eine schnelle Bedienung der Notlösevorrichtung nach Abziehen des Steckers möglich und es kann auf einfache Weise die Verbindung zu dem oder den Schalter(n) hergestellt werden.

Gemäß einer weiteren Ausführungsform kann ein Kontaktschalter zur Erfassung der Position in einem geringen Abstand des Kolbens von der zurückgezogenen, die Bremse vollständig lösenden Position vorgesehen sein. Eine solche Einstellung des Schalters könnte beispielsweise auf ca. 10 bis 20 mm vor der zurückgezogenen Position vorgenommen werden. Dieser Kontaktschalter erfasst dann einen Betriebszustand, in dem die Bremsbeläge bei einer Löseoperation gerade nicht mehr an der Bremsscheibe anliegen bzw. bei einem Bremsvorgang gerade noch nicht anliegen und also kein Bremsmoment vorhanden ist. Der weitere Lösehub des Kolbens bis zur zurückgezogenen Position ist dann erforderlich, um das volle Lüftspiel zwischen Scheibe und Bremsbelägen zu schaffen. Eine Schaltereinstellung auf den genannten Wert ermöglicht es, ein Schaltsignal zu erhalten, dass möglichst zeitnah zum funktionalen Lösen bzw. Wirksamwerden der Bremse abgegeben wird. Mit diesem Signal kann beispielsweise eine elektronische Steuerung versorgt werden, die dann eine Unterstützung beim Anfahren am Berg oder die "Hillholder"-Funktion unterstützt. Bei dieser Weiterbildung ist auch ein Schalter mit zwei Schaltstellungen verwendbar, der sowohl in der völlig zurückgezogenen Position als auch in der beabstandeten Position des Kolbens ein Signal abgibt.

Ferner ist es möglich, einen Näherungsschalter einzusetzen, der in einem definierten Abstand der auslösenden Bauteile anspricht.

Gemäß einer weiteren Ausführungsform umfasst die Lösespindel endseitig einen verdickten Lösespindelkopf, wobei an der der Lösespindel zugewandten ringförmigen Seite des Lösespindelkopfes ein Kontaktschalter zur Erfassung des Eingriffs des Lösespindelkopfes mit dem Kolben vorgesehen ist. Ein so angeordneter Kontaktschalter bildet einen ortsfesten Bezugspunkt sowohl für die Erkennung der Position des Kolbens als auch für die auf der Spindel sich bewegende Lösemutter. Dabei können zwei Schalter verwendet werden, wovon einer zwischen dem Kopf der Lösespindel und einer inneren Stirnfläche eines am Federspeicherkolbenrohr festgelegten Elementes ist, während der andere zwischen der Lösemutter und der kreisförmigen Stirnfläche des Lösespindelkopfes angeordnet ist. Auf diese Art und Weise ist es möglich, zwei getrennte Signale zu erhalten, eines für die Löseposition des Kolbens und das zweite Signal für die Fahrbetriebsstellung, wenn die Notlösevorrichtung aktiviert ist.

Der Kontaktschalter kann ferner am Boden des Zylinderkörpers eingebaut sein, so dass der Kontaktschalter in der vollständig zurückgezogenen Position des Kolbens betätigt wird.

Ferner kann der Kontaktschalter auch an einer Kolbenstange angebracht sein, die zwischen dem Federspeicherkolben und dem Bremshebel angeordnet ist und mit diesem eine Einheit bildet, da sie ständig gegen den Kolben gedrückt gehalten ist.

Nach einer Ausgestaltung des Anspruches 11 ist es möglich, einen Kontaktschalter an oder in dem Stecker anzuordnen und den Kontaktschalter über einen in der Lösespindel vorgesehenen Stift zu betätigen.

Nach der Ausgestaltung des Anspruches 12 ist ein Kontaktschalter vorgesehen, dessen Signalauslösung relativ zu einer definierten Hubstellung des Kolbens oder der Lösespindel einstellbar ist.

Die Erfindung wird nachfolgend anhand mehrerer Ausführungsbeispiele mit Bezug auf die beigefügte Zeichnung näher erläutert. Es zeigt:

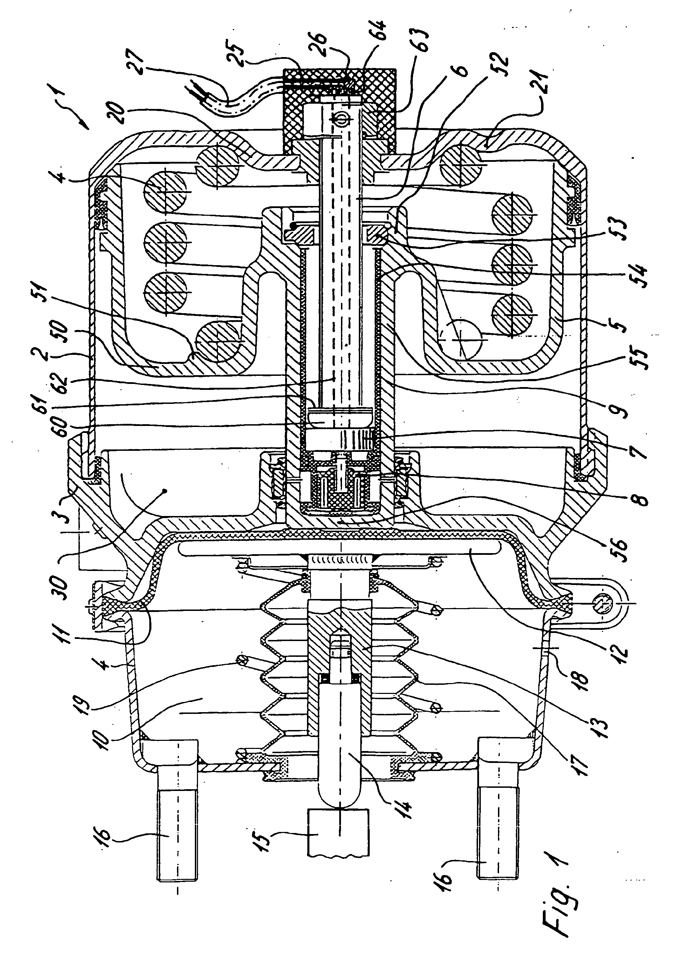

- Fig. 1: eine geschnittene Seitenansicht eines Ausführungsbeispieles eines erfindungsgemäßen Federspeicherzylinders.

Ein Federspeicherzylinder 1 umfasst ein erstes Gehäuseteil 2, ein zweites mittleres Gehäuseteil 3 und ein viertes Gehäuseteil 3'. In dem ersten Gehäuseteil 2 ist eine Feder 4 aufgenommen, die sich an einer Seite an dem Gehäuse 2 abstützt und an der gegenüberliegenden Seite an einem Kolben 5 anliegt. Zur Aufnahme der Feder 4 umfasst der Kolben 5 einen U-förmigen Abschnitt 50, in dem Profilierungen 51 zur formschlüssigen Aufnahme der endseitigen letzten Federwicklung vorgesehen sind. Auf der gegenüberliegenden Seite umfasst das Gehäuse 2 ebenfalls Profilierungen 20 und 21 zur Aufnahme der endseitigen Federwicklung. In dem zwischen den Gehäuseteilen 2 und 3 sowie dem Kolben 5 gebildeten Raum ist ein mit Druck beaufschlagbarer Primärraum 30 des Feststellbremsteiles vorgesehen.

Innerhalb des Kolbens 5 ist eine Lösespindel 6 angeordnet, die einen Lösespindelkopf 60 aufweist, der an der nach außen gewandten Stirnseite an einem Kontaktschalter 7 anliegt. Der Kontaktschalter 7 umfasste einen Kontaktschalterkopf, der über einen Stößel mit einem Gewindeabschnitt verbunden ist. Der Gewindeabschnitt ist in einen Anschlag 8 in Form einer inneren Durchlüftung für den Kolben 5 eingeschraubt. Der Kontaktschalterkopf ist über eine Dichtung bzw. Gleitführung teilweise in dem Lösespindelkopf 60 aufgenommen. In der dargestellten Position liegt eine erste Kontaktstelle und eine zweite Kontaktstelle am Kontaktschalterkopf an, der über leitende Verbindungen verfügt und so einen Kontrollstromkreis schließen kann.

Die Lösespindel 6 ist in einem rohrförmigen Abschnitt 55 des Kolbens 5 aufgenommen, in dem ein Kolbenrohr 54 festgelegt ist. Der Kolben 5 umfasst einen Halteabschnitt 52, in dem ein Sperrelement 53 montiert ist, um das Kolbenrohr 54 zu fixieren und um einen Anschlag für die Rückseite des Lösespindelkopfes 61 zu bilden. Der Kolben 5 kann sich maximal von der in Fig. 1 gezeigten zurückgezogenen Position mit der Hubstellung 0, in der der Lösespindelkopf 60 am Kontaktschalter 7 anliegt nach links bewegen, bis die Stirnfläche des Abschnittes 50 am der zugewandten Stirnfläche des Gehäuseteiles 3 anliegt.

Der Kolben 5 drückt mit einer Stirnseite 56 auf eine Membran 11, die zwischen dem mittleren Gehäuseteil 3 und dem Gehäuseteil 4 festgelegt ist. In dem zwischen Gehäuse 4 und Membran 11 gebildeten Raum ist ein mit Druck beaufschlagbarer Sekundärraum 10 (Primärraum des Betriebsbremsteiles) vorgesehen, in dem eine Kolbenstange 13 aufgenommen ist, die mit einer Platte 12 an der Membran 11 anliegt. An der Kolbenstange 13 ist ein Druckstück 14 montiert, das mit einer Stirnseite auf einen nicht näher dargestellten Bremshebel 15 drückt. Durch eine Bewegung des Kolbens 5 kann somit unter Zwischenschaltung der Membran 11, der Platte 12, der Kolbenstange 13 sowie des Druckstückes 14 der zum Druckstück 14 hin vorgespannte Bremshebel 15 betätigt werden. Dabei ist das Gehäuseteil 4 über Stehbolzen 16 an einem nicht gezeigten Bremssattel festgelegt.

In dem Gehäuseteil 4 ist ein Faltenbalg 17 zwischen der stirnseitigen zum Bremshebel 15 gewandten Seite und an der Kolbenstange 13 benachbart zu der Platte 12 festgelegt, um eine Abdichtung des Sekundärraumes 10 zu schaffen. Der Sekundärraum 10 kann zur Betätigung der Betriebsbremse über eine nicht dargestellte Belüftung mit Druck beaufschlagt werden. Der Sekundärraum 10 steht über eine Öffnung 18 mit der Umgebungsluft in Verbindung. Im montierten Zustand ist die Platte 12 der Kolbenstange 13 über eine Feder 19 in die gezeigte Position hin vorgespannt.

In der Darstellung der Figur 1 ist der Primärraum 30 über eine nicht dargestellte Belüftung mit Druck beaufschlagt. Damit befindet sich der Kolben 5 in der zurückgezogenen Position, in der die Stirnfläche des Lösespindelkopfes 60 an dem Kontaktschalter 7 anliegt. Dadurch wird im Kontaktschalter 7 ein Stromkreis geschaltet und ein Signal erzeugt, das über in der Lösespindel 6 angeordnete Leitungen 62 zu Kontaktstiften 64 übertragen wird. Die Kontaktstifte 64 sind in Eingriff mit Kontaktelementen 26 eines Steckers 25, der auf eine Lösemutter 63 aufgesteckt ist. Die Signale des Kontaktschalters 7 werden dann weiter über eine Leitung 27 zu einer nicht dargestellten Steuerung eines Bremssystems eines Fahrzeuges geleitet.

Zur Betätigung der Feststellbremse wird in dem Primärraum 30 der Druck abgesenkt, bis die Kraft der Feder 4 größer als der auf den Kolben 5 wirkende Druck in dem Primärraum 30 ist. Dadurch wird der Kolben 5 zusammen mit der Membran 11 der Kolbenstange 13 und dem Druckstück 14 zu dem Bremshebel 15 bewegt, der nach Überwinden des Lüftspiels für eine Bremskraft sorgt. Zum Lösen der Feststellbremse wird in dem Primärraum 30 Druck aufgebaut, bis sich der Kolben 5 wieder in die zurückgezogene Position bewegt. Sobald der Kontaktschalter 7 an der Stirnfläche des Lösespindelkopfes 60 anliegt, wird ein Signal abgegeben, das die bereite Fahrstellung signalisiert. Dadurch kann einerseits ein weiterer Druckaufbau in dem Primärraum 30 abgeschaltet werden, da die Endstellung schon erreicht ist, und über die Steuerung des Systems dem Fahrer die Mitteilung gegeben werden, dass das Fahrzeug fahrbereit ist.

Sollte sich aufgrund eines Defektes, beispielsweise weil nicht genügend Druck in dem Primärraum 30 aufgebaut werden kann, ein Lösen der Bremse nicht vornehmen lassen, kann nach Abziehen des Steckers 25 die Lösemutter 63 betätigt werden, damit die Lösespindel 6 nach außen gedreht werden kann. Dabei greift die ringförmige Fläche 61 an dem Sperrelement 53 an und zieht so den Kolben 5 in die zurückgezogene Position. Bei Aktivierung der Notlösevorrichtung wird zwar der Kolben 5 in die zurückgezogene Position bewegt, allerdings wird über den Kontaktschalter 7 kein Signal abgegeben, da der Lösespindelkopf 60 nicht am Kontaktschalter 7 anliegt. Dadurch kann dem Fahrer signalisiert werden, dass an dem Federspeicherzylinder 1 die Notlösevorrichtung aktiviert ist und der Schaden schnellstmöglich behoben werden muss.

In dem dargestellten Ausführungsbeispiel ist der Kontaktschalter 7 zwischen Lösespindelkopf 60 und der Entlüftungseinrichtung 8 angeordnet. Es ist auch möglich, einen Schalter in den Boden des Gehäuseteils 2 einzubauen, der durch die Aufnahme 50 des Kolbens 5 betätigt wird.

Ferner können mehrere Schalter vorgesehen sein, um verschiedene Betriebsstellungen des Kolbens 5 zu erfassen. Ein Schalter kann wie gezeigt zwischen dem Lösespindelkopf 60 und der inneren Stirnseite 56 des Federspeicherkolbenrohres eingebaut sein, während der andere Schalter zwischen der Lösemutter 63 und der kreisringförmigen Stirnfläche 61 des Lösespindelkopfes 60 angeordnet ist. Auf diese Art und Weise ist es möglich, zwei getrennte Signale zu erhalten, eines für die Löseposition des Federspeicherkolbens und das zweite Signal für die Fahrbetriebsstellung der Lösemutter 63. Mit entsprechendem Mehraufwand für einen dritten Schalter am Zylinderboden ist es auch möglich, die andere Endstellung der Lösemutter 63 im voll notgelösten Betriebsfall zu überwachen.

Nachfolgend werden zwei weitere Ausführungsbeispiele eines erfindungsgemäßen Federspeicherzylinders beschrieben, wobei identische Bauteile mit dem selben Bezugszeichen versehen sind und nur die Abwandlungen gegenüber dem ersten Ausführungsbeispiel im Detail beschrieben werden.

Bei einem Federspeicherzylinder ist ein erster Kontaktschalter 7 vorgesehen, der wie bei dem vorangegangenen Ausführungsbeispiel einen Kontaktschalterkopf umfasst, der teilweise in dem Lösespindelkopf aufgenommen ist. An dem Lösespindelkopf ist ferner ein zweiter Kontaktschalter mit einem Schalterkopf montiert, der zwischen einem Sprengring und einer Rückseite des Lösespindelkopfes angeordnet ist. Der Kontaktschalter kann ein Signal abgeben, wenn die Rückseite des Lösespindelkopfes an dem Schalterkopf anliegt, wobei in dem Lösespindelkopf Leitungen und angeordnet sind, um eine entsprechende elektrische Verbindung herstellen zu können. Der Kontaktschalter erfasst dabei eine Position, wenn der Kolben 5 etwa um eine Spindeldrehung verschoben ist, so dass auf diese Weise die Fahrstellung signalisiert werden kann. Der Kontaktschalter ist somit in einem gewissen Abstand von der zurückgezogenen Position vorgesehen, damit die Stellung des Kolbens 5 erfasst wird, bei der die Bremse ihre Wirkung aufgegeben hat und das Lüftspiel überwunden ist. Um den baulichen Aufwand begrenzt zu halten, sind die Leitungen für die beiden Kontaktschalter in einer gemeinsamen Bohrung untergebracht, die sich durch die Lösespindel 6 erstreckt. Auf der gegenüberliegenden Seite der Lösespindel 6 ist eine Abdeckung vorgesehen, die über eine einstellbare Lösemutter greift.

Bei einem weiteren Ausführungsbeispiel ist ein Kontaktschalter mit einem Schalterkopf an der Außenseite des Federspeichers im Bereich eines Steckers angebracht. Der Schalterkopf ist in dem Stecker aufgenommen, wobei seitlich ein Dichtungsring bzw. ein Gleitelement vorgesehen ist. Auf der zur Lösespindel 6 abgewandten Seite sind zwei Kontaktstellen und vorgesehen, mit denen der Schalterkopf zusammenwirkt, um einen Kontrollstromkreis zu schließen. Die Betätigung des Kontaktschalters erfolgt über eine Stange, an deren Ende ein Halter für den Schalterkopf vorgesehen ist. Die Stange ist dabei verschiebbar durch einen Kanal in der Lösespindel 6 geführt. Die Stange wird bei Erreichen der zurückgezogenen des Kolbens 5 durch diesen bewegt und so der außenliegende Kontaktschalter betätigt. Bei dieser Variante kann der Kontaktschalter auch in das Steckergehäuse integriert sein oder in anderer, vorteilhafter Weise mit dem Stecker zu einer, vorzugsweise hermetisch abgedichteten, Funktionseinheit zusammengefaßt sein. Ferner können über einen solchen externen Schalter auch andere Positionen des Kobens 5 erfasst werden.

Die Exaktheit des Schaltsignales in Bezug auf das Erreichen der Löseposition (oder einer definierten Hubstellung) des Federspeicherkolbens ist beeinflußt von der Maßgenauigkeit der Bauteile, die die Stellung der Stirnflächen von Federspeicherkolbenrohr und Lösespindelkopf 63 relativ zueinander bestimmen. Um die Fertigungstoleranzen dieser Komponenten nicht kostentreibend einschränken zu müssen, ist es vorteilhaft, eine Einstellmöglichkeit der Signalauslösung zu schaffen.

Bei der Montage der Federspeicherteile wird am Ende meist die Lösemutter 63 auf das freie Gewindeende der Lösespindel 6 aufgeschraubt. Dann werden die beiden Bauteile verstiftet, d.h. durch Einbringen einer Querbohrung durch beide miteinander verschraubten Teile, in die dann ein Stift oder ähnliches eingebracht wird, werden diese relativ zueinander fixiert. Dieses Verstiften kann zum Einstellen der gezeigten Kontaktschalters genutzt werden.

Hierfür wird der Kolben 5 durch Druckbeaufschlagung in die Löseposition gebracht. Die Lösespindel 6 ist teilweise oder vollständig aus dem Gehäuse 2 herausgeschraubt. Die Lösespindel 6 wird anschließend solange in den Abschnitt 55 des Kolbens 5 eingedreht, bis der Kontaktschalter anspricht. Das Ansprechen des Kontaktschalters kann über eine Spannungsquelle und eine Prüfeinrichtung angezeigt werden. Die so ermittelte Stellung der Lösespindel 6 wird dann beispielsweise durch Verstiften fixiert, in dem die Lösemutter 63 auf die Lösespindel 6 bis zum Anschlag aufgeschraubt wird und anschließend verstiftet wird.

Der Einstellvorgang für die Signalauslösung des Kontaktschalters kann auch automatisiert erfolgen, in dem der Schalter für den Schrauberantrieb direkt mit dem Abschaltsignal des Kontaktschalters versorgt wird.

Auch andere Einstellverfahren für die Signalauslösung des Kontaktschalters können eingesetzt werden.

### Bezugszeichenliste

- 1: Federspeicherzylinder
- 2: Erstes Gehäuseteil
- 3: Zweites Gehäuseteil
- 3': Drittes Gehäuseteil
- 4: Feder
- 5: Kolben
- 6: Lösespindel
- 7: Kontaktschalter
- 8: Anschlag
- 9: Hülse
- 10: Sekundärraum
- 11: Membran
- 12: Platte
- 13: Kolbenstange
- 14: Druckstück
- 15: Bremshebel
- 16: Stehbolzen
- 17: Faltenbalg
- 18: Öffnung
- 19: Feder
- 20: Profilierung
- 21: Profilierung
- 25: Stecker
- 26: Kontaktelement
- 27: Leitung
- 30: Primärraum
- 50: Aufnahme
- 51: Profilierung
- 52: Halteabschnitt
- 53: Sperrelement
- 54: Kolbenrohr
- 55: Rohrförmiger Abschnitt
- 56: Stirnseite
- 60: Lösespindelkopf
- 61: Rückseite Lösespindelkopf
- 62: Leitung
- 63: Lösemutter
- 64: Kontaktstift

## Patentansprüche

1. Federspeicherzylinder (1) zur Erzeugung von Bremskräften für die Hilfs- und Feststellbremswirkung, mit einem in einem Gehäuse (2, 3) angeordneten Kolben (5), der zur Betätigung eines Bremshebels (15) bewegbar ist, und der über eine Feder (4) zu dem Bremshebel (15) hin vorgespannt ist, einer Lösespindel (6), mittels der der Kolben (5) von einer ausgefahrenen den Bremshebel (15) in Bremsstellung betätigenden Position gegen die Kraft der Feder (4) in eine zurückgezogene, die Bremse lösende Position verfahrbar ist, und einem in dem Gehäuse (2, 3) angeordneten mit Druck beaufschlagbaren Primärraum (30), in dem bei Übersteigen eines Ansprechdruckes der Kolben (5) gegen die Kraft der Feder (4) in die zurückgezogene Position bewegt wird, **dadurch gekennzeichnet, dass** zur Erfassung der Position des Kolbens (5) in dem Gehäuse (2, 3) mindestens ein Kontaktschalter (7) zwischen der Lösespindel (6) und dem Kolben (5) vorgesehen ist.

2. Federspeicherzylinder nach Anspruch 1, **dadurch gekennzeichnet, dass** mit dem Kontaktschalter (7) die zurückgezogene Position des Kolbens (5) erfassbar ist.

3. Federspeicherzylinder nach einem der Ansprüche 1 bis 2, **dadurch gekennzeichnet, dass** die Lösespindel (6) einen Lösespindelkopf (60) umfasst, der in einem Rohrabschnitt (55) des Kolbens (5) angeordnet ist und an der äußeren Stirnseite des Lösespindelkopfes (60) ein Kontaktschalter (7) vorgesehen ist, mit dem die zurückgezogene Position des Kolbens (5) erfassbar ist.

4. Federspeicherzylinder nach einem der Ansprüche 1 bis 3, **dadurch gekennzeichnet, dass** die Lösespindel (6) endseitig einen verdickten Lösespindelkopf (60) umfasst und an der der Lösespindel (6) zugewandten Seite (61) des Lösespindelkopfes (60) ein Kontaktschalter zur Erfassung des Eingriffs des Lösespindelkopfes (60) mit dem Kolben (5) vorgesehen ist.

5. Federspeicherzylinder nach einem der Ansprüche 1 bis 4, **dadurch gekennzeichnet, dass** in der Lösespindel (6) mindestens ein Kanal (62) zur Aufnahme von Leitungen zu dem Kontaktschalter (7) vorgesehen sind.

6. Federspeicherzylinder nach Anspruch 5, **dadurch gekennzeichnet, dass** an einem aus dem Gehäuse (2) ragenden Abschnitt der Lösespindel (6) mit dem Kontaktschalter (7) verbundene Kontaktelemente (64) vorgesehen sind, die über einen Stecker (25) kontaktierbar sind.

7. Federspeicherzylinder nach einem der Ansprüche 1 bis 6, **dadurch gekennzeichnet, dass** ein Kontaktschalter zur Erfassung der Position in einem geringen Abstand des Kolbens (5) von der zurückgezogenen, die Bremse vollständig lösenden Position vorgesehen ist.

8. Federspeicherzylinder nach einem der Ansprüche 1 bis 7, **dadurch gekennzeichnet, dass** am Gehäuse (2, 3) ein oder mehrere Kontaktschalter zur Erfassung der Position des Kolbens (5) vorgesehen sind.

9. Federspeicherzylinder nach einem der Ansprüche 1 bis 8, **dadurch gekennzeichnet, dass** der Kolben (5) stirnseitig auf eine Membran (11) durch die Feder (4) gedrückt ist, die über eine Kolbenstange (13) mit einem Druckstück (14) auf einen Bremshebel (15) drückt.

10. Federspeicherzylinder nach einem der Ansprüche 1 bis 9, **dadurch gekennzeichnet, dass** ein Kontaktschalter an oder in dem Stecker (25) angeordnet ist und der Kontaktschalter über einen in der Lösespindel (6) vorgesehenen Stift betätigbar ist.

11. Federspeicherzylinder nach einem der Ansprüche 1 bis 10, **dadurch gekennzeichnet, dass** ein Kontaktschalter (7) vorgesehen ist, dessen Signalauslösung relativ zu einer definierten Hubstellung des Kolbens (5) oder der Lösespindel (6) einstellbar ist.

12. Federspeicherzylinder nach einem der Ansprüche 1 bis 11, **dadurch gekennzeichnet, dass** ein Kontaktschalter (7) einen Schalterkopf umfasst, der mit Kontaktstellen zusammenwirkt, um bei Kontakt eine elektrische Verbindung bereit zu stellen.

## Claims

1. Spring-loaded cylinder (1) for the production of braking forces for the action of the auxiliary and parking brake, with a piston (5) arranged in a housing (2, 3), which can be moved in order to actuate a brake lever (15) and which is pre-stressed by a spring (4) towards the brake lever (15), a release spindle (6) by means of which the piston (5) can be moved from an extended position that actuates the brake lever (15) in its braking position against the force of the spring (4) to a retracted position that releases the brake, and a primary chamber (30) in the housing (2, 3) which can be pressurised and in which, when a response pressure is exceeded, the piston (5) is moved against the force of the spring (4) to the retracted position, **characterised in that** to detect the position of the piston (5) in the housing (2, 3) at least one contact switch (7) is provided between the release spindle (6) and the piston (5).

2. Spring-loaded cylinder according to Claim 1, **characterised in that** the retracted position of the piston (5) can be detected by means of the contact switch (7).

3. Spring-loaded cylinder according to either of Claims 1 or 2, **characterised in that** the release spindle (6) has a release spindle head (60) arranged in a tubular section (55) of the piston (5) and a contact switch (7) is provided on the outer end face of the release spindle head (60), by means of which the retracted position of the piston (5) can be detected.

4. Spring-loaded cylinder according to any of Claims 1 to 3, **characterised in that** at its end the release spindle (6) has a thickened release spindle head (60) and on the side (61) of the release spindle head (60) facing towards the release spindle (6) a contact switch is provided to detect the engagement of the release spindle head (60) with the piston (5).

5. Spring-loaded cylinder according to any of Claims 1 to 4, **characterised in that** at least one channel (62) is provided in the release spindle (6) to accommodate the wiring to the contact switch (7).

6. Spring-loaded cylinder according to Claim 5, **characterised in that** on a section of the release spindle (6) that projects out of the housing (2) contact elements (64) connected to the contact switch (7) are provided, which can be contacted by means of a plug (25).

7. Spring-loaded cylinder according to Claims 1 to 6, **characterised in that** a contact switch is provided in order to detect the position of the piston (5) a small distance away from its retracted position in which the brake is released fully.

8. Spring-loaded cylinder according to any of Claims 1 to 7, **characterised in that** one or more contact switches are provided on the housing (2, 3) to detect the position of the piston (5).

9. Spring-loaded cylinder according to any of Claims 1 to 8, **characterised in that** at its end the piston (5) is pressed by the spring (4) against a membrane (11), which presses against a brake lever (15) with a pressure element (14) via a piston rod (13).

10. Spring-loaded cylinder according to any of Claims 1 to 9, **characterised in that** a contact switch is arranged on or in the plug (15) and the contact switch can be actuated by a pin provided in the release spindle (6).

11. Spring-loaded cylinder according to any of Claims 1 to 10, **characterised in that** a contact switch (7) is provided, whose signal emission can be adjusted relative to a defined stroke position of the piston (5) or the release spindle (6).

12. Spring-loaded cylinder according to any of Claims 1 to 11, **characterised in that** a contact switch comprises a switch head which co-operates with contact points in order to produce an electric connection on contact.

## Revendications

1. Cylindre à accumulateur (1) à engendrer des efforts de freinage afin de créer l'effet de freinage auxiliaire et de stationnement, comprenant un piston (5) disposé dans un carter (2, 3), qui est mobile pour le commande d'un levier du frein (15) et qui est mis en précontrainte via un ressort (4) vers ledit levier du frein (15), ainsi qu'une broche de desserrage (6), moyennant laquelle ledit piston (5) peut être déplacé à partir d'une position avancée, commandant ledit levier du frein (15) en une position de serrage du frein, en une position rentrée de desserrage du frein, à l'encontre de l'effort dudit ressort (4), et un volume primaire (30) disposé dans ledit carter (2, 3) et apte à être mis sous pression, dans lequel ledit piston (5) est déplacé en sa position rentrée, à l'encontre de l'effort dudit ressort (4), quand un niveau de pression de réponse est dépassé, **caractérisé en ce qu'**au moins un interrupteur de contact est disposé entre ladite broche de desserrage (6) et ledit piston pour la détection de la position dudit piston (5) dans ledit carter (2, 3).

2. Cylindre à accumulateur selon la revendication 1, **caractérisé en ce que** la position rentrée dudit piston (5) est détectable moyennant ledit interrupteur de contact (7).

3. Cylindre à accumulateur selon une quelconque des revendications 1 à 2, **caractérisé en ce que** ladite broche de desserrage (6) comprend une tête de broche de desserrage (60), qui est disposée dans un segment de tube (55) dudit piston (5) et **en ce qu'**un interrupteur de contact (7) est disposé au côté frontal extérieur de ladite tête de broche de desserrage (60), moyennant lequel la position rentrée dudit piston (5) est détectable.

4. Cylindre à accumulateur selon une quelconque des revendications 1 à 3, **caractérisé en ce que** ladite broche de desserrage (6) comprend une tête de broche de desserrage (60) épaissie du côté d'extrémité, et **en ce qu'**un interrupteur de contact est disposé au côté (61) de ladite tête de broche de desserrage (60), qui est tourné vers ladite broche de desserrage (6), pour la détection de la prise de ladite tête de broche de desserrage (60) dans ledit piston (5).

5. Cylindre à accumulateur selon une quelconque des revendications 1 à 4, **caractérisé en ce qu'**au moins un passage (62) est formé dans ladite broche de desserrage (6) de façon à recevoir des conduits menés vers ledit interrupteur de contact (7).

6. Cylindre à accumulateur selon une quelconque des revendications 1 à 5, **caractérisé en ce que** des éléments contacteurs (64) sont disposés à un segment de ladite broche de desserrage (6), qui fait saillie dudit carter (2), qui sont reliés audit interrupteur de contact (7) et qui sont aptes à être contacté via un connecteur (25).

7. Cylindre à accumulateur selon une quelconque des revendications 1 à 6, **caractérisé en ce qu'**un interrupteur de contact set disposé à détecter la position à un petit écart dudit piston (5) de la position rentrée de desserrage complet du frein.

8. Cylindre à accumulateur selon une quelconque des revendications 1 à 7, **caractérisé en ce qu'**un ou plusieurs interrupteurs de contact sont disposé audit carter (2, 3) à détecter la position dudit piston (5).

9. Cylindre à accumulateur selon une quelconque des revendications 1 à 8, **caractérisé en ce que** ledit piston (5) est pressé, de son côté frontal, contre une membrane (11) par ledit ressort (4), qui presse sur un levier du frein (15) via une tige de piston (13) moyennant un élément recevant la poussée.

10. Cylindre à accumulateur selon une quelconque des revendications 1 à 9, **caractérisé en ce qu'**un interrupteur de contact est disposé à ou dans ledit connecteur (25) et que ledit interrupteur de contact est commandable via une goupille montée dans ladite broche de desserrage (6).

11. Cylindre à accumulateur selon une quelconque des revendications 1 à 10, **caractérisé en ce qu'**un interrupteur de contact (7) est monté, dont le déclenchement d'un signal est ajustable relativement à une position définie de course dudit piston (5) ou de ladite broche de desserrage (6).

12. Cylindre à accumulateur selon une quelconque des revendications 1 à 11, **caractérisé en ce qu'**un interrupteur de contact (7) comprend une tête de commutation, qui coopère avec des sites de contact afin d'établir une connexion électrique au cas de contact.
